# EUROPÄISCHE PATENTSCHRIFT

(11) **EP 1 061 419 B1**
(45) Veröffentlichungstag und Bekanntmachung des Hinweises auf die Patenterteilung: **06.10.2004**
(21) Anmeldenummer: 00112374.4
(22) Anmeldetag: 09.06.2000
(51) Int. Cl.: G03G 9/09, C09D 11/00, C09D 5/03, H01G 7/02, G02B 5/20, G02B 5/22

(54) **Verwendung von Cyanpigmenten in elektrophotographischen Tonern und Entwicklern, Pulverlacken und Ink-Jet-Tinten**
Use of cyan pigments in electrophotographic toners, developers, powder lacquers and ink-jet-inks
Utilisation de pigments cyan dans des révélateurs et agents de développement électrophotographiques, laques en poudre et encres d'impression par jet

(30) Priorität: 18.06.1999 DE 19927835
(43) Veröffentlichungstag der Anmeldung: 20.12.2000
(73) Patentinhaber: Clariant GmbH, 65929 Frankfurt am Main (DE)
(72) Erfinder: Macholdt, Hans-Tobias, Dr., 64297 Darmstadt-Eberstadt (DE); Baur, Rüdiger, Dr., 65817 Eppstein (DE); Michel, Eduard, Dr., 60529 Frankfurt (DE); Geisenberger, Josef, Dr., 65843 Sulzbach (DE); Menzel, Heidemarie, 65812 Bad Soden (DE); Harz, Andreas, 68753 Waghäusel (DE)

(56) Entgegenhaltungen:
- EP-A- 0 042 507
- EP-A- 0 123 253
- EP-A- 0 526 012
- EP-A- 0 768 576
- EP-A- 0 893 737
- DE-A- 3 306 400
- US-A- 5 346 792
- DATABASE WPI Section Ch, Week 198241 Derwent Publications Ltd., London, GB; Class A60, AN 1982-86487E XP002149242 & JP 57 141453 A (DAINIPPON INK & CHEM KK) , 1. September 1982 (1982-09-01)

## Beschreibung

Die vorliegende Erfindung betrifft den Einsatz einer bestimmten Kupferphthalocyanin-Zusammensetzung in elektrophotographischen Tonern und Entwicklern, Pulverlacken und Ink-Jet-Tinten.

Bei elektrophotographischen Aufzeichnungsverfahren wird auf einem Photoleiter ein "latentes Ladungsbild" erzeugt. Dieses "latente Ladungsbild" wird durch Aufbringen eines elektrostatisch geladenen Toners entwickelt, der dann beispielsweise auf Papier, Textilien, Folien oder Kunststoff übertragen und beispielsweise mittels Druck, Strahlung, Hitze oder Lösungsmitteleinwirkung fixiert wird. Typische Toner sind Ein- oder Zweikomponentenpulvertoner (auch Ein- oder Zweikomponenten-Entwickler genannt), darüberhinaus sind noch Spezialtoner, wie z.B. Magnet- oder Flüssigtoner, Latextoner, Polymerisationstoner und mikroverkapselte Toner z.B. auf Wachsbasis, im Einsatz.

Ein Maß für die Tonerqualität ist seine spezifische Aufladung q/m (Ladung pro Masseeinheit). Neben Vorzeichen und Höhe der elektrostatischen Aufladung ist vor allem das schnelle Erreichen der gewünschten Ladungshöhe und die Konstanz dieser Ladung über einen längeren Aktivierzeitraum hinweg ein entscheidendes Qualitätskriterium. Darüber hinaus ist die Unempfindlichkeit des Toners gegen Klimaeinflüsse, wie Temperatur und Luftfeuchtigkeit, ein weiteres wichtiges Eignungskriterium.

Sowohl positiv als auch negativ aufladbare Toner finden Verwendung in Fotokopierem, Laserdruckem, LED-(Light emitting diods), LCS-(Liquid crystal shutter)-Druckem oder anderen digitalen Druckern auf elektrophotographischer Basis, in Abhängigkeit vom Verfahrens- und Gerätetyp.

Um elektrophotographische Toner oder Entwickler mit entweder positiver oder negativer Aufladung zu erhalten, werden häufig Ladungssteuermittel zugesetzt. Als farbgebende Komponente werden in Bunttonern typischerweise organische Farbpigmente eingesetzt. Farbpigmente haben gegenüber Farbstoffen wegen ihrer Unlöslichkeit im Anwendungsmedium erhebliche Vorteile, wie z.B. bessere Thermostabilität und Lichtechtheit.

Aufbauend auf dem Prinzip der "subtraktiven Farbmischung" kann mit Hilfe der drei Primärfarben Gelb, Cyan und Magenta das gesamte für das menschliche Auge sichtbare Farbspektrum wiedergegeben werden. Nur wenn die jeweilige Primärfarbe den genau definierten farblichen Anforderungen genügt, ist eine exakte Farbwiedergabe möglich. Andernfalls können einige Farbtöne nicht wiedergegeben werden und der Farbkontrast ist nicht ausreichend.

Bei Vollfarbtonern müssen die drei Toner Gelb, Cyan und Magenta neben den genau definierten farblichen Anforderungen auch hinsichtlich ihrer triboelektrischen Eigenschaften exakt aufeinander abgestimmt sein, da sie nacheinander im gleichen Gerät übertragen werden.

6- bzw. 7-Farbensysteme sind ebenfalls bekannt. Basisfarben sind Rot, Grün, Blau, Cyan, Magenta, Gelb und Schwarz. Weiterhin können Vollfarbdrucke nach dem Pantone Hexachrome® System mit den Farben Cyan, Magenta, Yellow, Black, Orange und Grün erstellt werden.

Von Farbmitteln ist bekannt, daß sie die triboelektrische Aufladung von Tonern nachhaltig beeinflussen können. Daher ist es normalerweise nicht möglich, die Farbmittel einer einmal erstellten Tonerbasisrezeptur einfach hinzuzufügen. Vielmehr kann es notwendig werden, für jedes Farbmittel eine eigene Rezeptur zu erstellen, für welche Art und Menge des benötigten Ladungssteuermittels speziell zugeschnitten werden. Dieses Vorgehen ist entsprechend aufwendig und kommt dann bei Farbtonem für Prozeßfarbe noch zusätzlich zu den bereits vorher beschriebenen Schwierigkeiten dazu.

Darüberhinaus ist für die Praxis wichtig, daß die Farbmittel eine hohe Thermostabilität und eine gute Dispergierbarkeit besitzen. Typische Einarbeitungstemperaturen für Farbmittel in die Tonerharze liegen bei Verwendung von Knetem oder Extrudern zwischen 100°C und 200°C. Dementsprechend ist eine Thermostabilität von 200°C, besser 250°C, von großem Vorteil. Wichtig ist auch, daß die Thermostabilität über einen längeren Zeitraum (ca. 30 Minuten) und in verschiedenen Bindemittelsystemen gewährleistet ist. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination.

Grundsätzlich besteht Bedarf an Bunt-Pigmenten, die eine möglichst hohe Transparenz, gute Dispergierbarkeit und einen geringen elektrostatischen, wenn möglich neutralen triboelektrischen, Eigeneffekt besitzen. Unter einem neutralen triboelektrischen Eigeneffekt wird verstanden, daß das Pigment möglichst keine Auswirkung auf die elektrostatische Eigenaufladung des Harzes zeigt und einer definierten Ladungseinstellung, z.B. durch Ladungssteuermittel, leicht folgt.

Die Transparenz ist von großer Bedeutung, weil beim Vollfarbkopieren oder Drucken beispielsweise die Farben Gelb, Cyan und Magenta übereinander kopiert oder gedruckt werden, wobei die Reihenfolge der Farben vom Gerät abhängt. Ist nun eine oben liegende Farbe nicht transparent genug, so kann die darunter liegende nicht ausreichend durchscheinen und die Farbwiedergabe ist verzerrt. Beim Kopieren oder Drucken auf Overhead-Folien ist die Transparenz noch bedeutsamer, da hier mangelnde Transparenz auch nur einer Farbe die gesamte Bildprojektion grau erscheinen läßt.

Weiterhin kommt dem Farbton Cyan eine hohe Bedeutung zu, da er sowohl im Vierfarbdruck als auch im 6- oder 7-Farbdruck angewendet wird.

Der vorliegenden Erfindung lag die Aufgabe zugrunde, ein verbessertes Cyanpigment für den Einsatz in elektrophotographischen Tonern und Entwicklern, Pulverlacken, Ink-Jet-Tinten, Farbfiltern und Elektretfasern zur Verfügung zu stellen, das den vorstehenden Anforderungen genügt.

Die Aufgabe wurde überraschenderweise durch die Verwendung nachstehend definierter Kupferphthalocyanin-Zusammensetzung gelöst.

Gegenstand der vorliegenden Erfindung ist die Verwendung einer Kupferphthalocyanin-Zusammensetzung, bestehend im wesentlichen aus einer Verbindung der Formel (I) 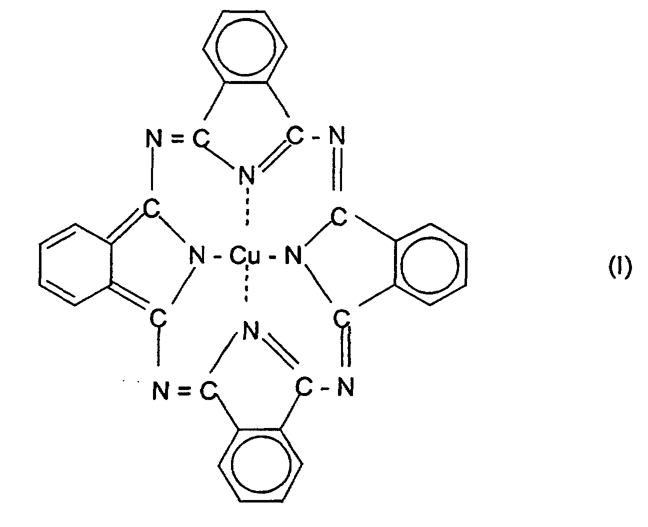 und einer Verbindung der Formel (II) 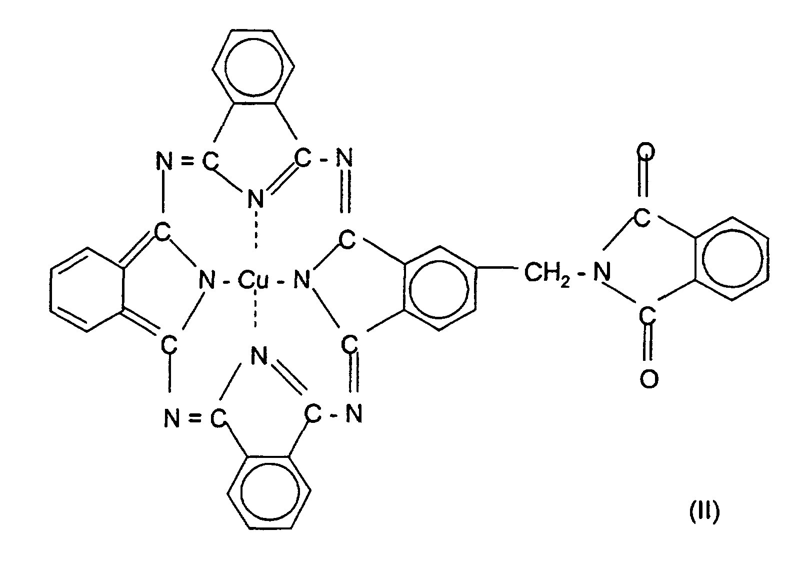 als Farbmittel in elektrophotographischen Tonern und Entwicklern, Pulvern und Pulverlacken, Elektretmaterialien, Ink-Jet-Tinten sowie in Farbfiltern, dadurch gekennzeichnet, daß die Verbindungen der Formeln (I) und (II) eine Teilchenform von einem mittleren Länge-zu-Breite-Verhältnis von größer als 2,5:1, vorzugsweise von 3:1 bis 6:1, haben.

Die Mengenverhältnisse zwischen der Verbindung der Formel (I) und der Verbindung der Formel (II) können in weiten Grenzen schwanken, z.B. von 0,1 zu 99,9 Gew.-% bis 99,9 zu 0,1 Gew.-%. Bevorzugt sind Zusammensetzungen von 80 bis 99,5 Gew.-% der Verbindung der Formel (I) und 0,5 bis 20 Gew.-% der Verbindung der Formel (II). Besonders bevorzugt sind Zusammensetzungen von 90 bis 99 Gew.-% der Verbindung der Formel (I) und 1 bis 10 Gew.-% der Verbindung der Formel (II).

Die Verbindung der Formel (I) ist an sich bekannt (DE-A-2 432 564) und unter der Bezeichnung C.I. Pigment Blue 15 im Handel. Bevorzugt ist die β-Modifikation, die unter den Namen C.I. Pigment Blue 15:3 und 15:4 bekannt ist. Prinzipiell sind jedoch auch die α-Modifikation (C.I. Pigment Blue 15:1 und 15:2, 0,5 bis 1 Cl) und die ε-Modifikation (C.I. Pigment Blue 15:6) geeignet.
Die Verbindung der Formel (II) ist an sich bekannt und kann analog zur EP-A-0 508 704 durch Umsetzung des N-Methylol-phthalimids mit einem Phthalocyanin hergestellt werden.

Herkömmliches C.I. Pigment Blue 15, insbesondere 15:3, besitzt einen sehr ausgeprägten triboelektrischen Eigeneffekt (z. B. U. Schlösser et al., Society of Imaging Science and Technology, 11^{th} Congress on Advances in Non-Impact Printing Technology, Hilton Head, SC, Oct. 29 - Nov. 11, 1995, Proceedings pp 110-112) der nur sehr aufwendig und oft nur teilweise überwunden werden kann, z.B. durch Zugabe von Ladungssteuermitteln, was sehr aufwendig ist.

Neu und überraschend ist, daß die erfindungsgemäß eingesetzte Phthalocyanin-Zusammensetzung mit der besagten Teilchenform einen sehr stabilen und neutralen triboelektrischen Eigeneffekt besitzt, sowie eine signifikante Verbesserung bezüglich Transparenz und Dispergierbarkeit aufweist. Als triboelektrischer Eigeneffekt ist der Einfluß des Farbmittels auf die elektrostatische Aufladung des Bindemittels zu verstehen. Es wird normalerweise angestrebt, daß das Farbmittel das Aufladungsverhalten des Bindemittels nicht verändert. Im Idealfall weist das Bindemittel unabhängig vom Farbmittelzusatz nach gleicher Aktivierungszeit die gleiche Ladung pro Masse auf. Daß eine nadelförmige Teilchenmorphologie bei der erfindungsgemäßen Kupferphthalocyanin-Zusammensetzung zu einem stabilen und neutralen triboelektrischen Eigeneffekt führt, war sehr überraschend, weil aus EP-A-0 813 117 bekannt ist, daß das dort verwendete Farbmittel einen umso stabileren und neutralen triboelektrischen Eigeneffekt aufweist, je weniger nadelförmig, d.h. je würfelförmiger, die Pigmentteilchen sind, also genau umgekehrt wie im vorliegenden Fall.

Weiterhin war überraschend, daß die erfindungsgemäße Kupferphthalocyanin-Zusammensetzung trotz nadelförmiger Teilchenform eine hohe Flockungsstabilität, leichte Dispergierbarkeit in wäßrigen und nicht-wäßrigen Medien, hohe Farbstärke und Glanz aufweist. Eine leichte Dispergierbarkeit ist außer für Toner, Pulverlacke und Elektretmaterialien insbesondere für Ink-Jet-Tinten von Bedeutung, da hier die Pigmentdispergierung extrem feinteilig sein muß, um die sehr feinen Druckerdüsen nicht zu verstopfen.

Des weiteren weist die so hergestellte Kupferphthalocyanin-Zusammensetzung eine hohe negative Teilchenoberflächenladung, beispielsweise im Bereich von -60 bis -300 mV/mg, insbesondere von -60 bis -120 mV/mg, auf.

Die erfindungsgemäße Phthalocyanin-Zusammensetzung kann hergestellt werden, indem Rohkupferphthalocyanin mit einer geeigneten Mahlvorrichtung feinverteilt wird, z.B. auf einer Rührwerkskugelmühle oder einer Perlmühle, das feinverteilte Kupferphthalocyanin einem Lösemittelfinish in wäßrig-organischem oder organischem Medium bei einer Temperatur von 20 bis 200 °C für einen das Kristallwachstum ermöglichenden Zeitraum, z. B. mindestens 1/2 Stunde, vorzugsweise 2 bis 10 Stunden, unterworfen wird und dann das Phthalimidomethylen-CuPc zugegeben wird. Als organisches Medium kommen beispielsweise Alkohole, wie n- oder i-Butanol, Ketone, wie Methylethylketon, Methylisobutylketon oder Diethylketon und Carbonsäureamide, wie DMF oder Dimethylacetamid, in Betracht.

Außer in elektrophotographischen Tonern und Entwicklern kann die Kupferphthalocyanin-Zusammensetzung auch als Farbmittel in Pulvern und Lacken, insbesondere in triboelektrisch oder elektrokinetisch versprühten Pulverlacken, wie sie zur Oberflächenbeschichtung von Gegenständen aus beispielsweise Metall, Holz, Textilmaterial, Papier oder Kautschuk zur Anwendung kommen, eingesetzt werden. Der Pulverlack oder das Pulver erhält seine elektrostatische Aufladung im allgemeinen nach einem der beiden folgenden Verfahren:
a) Beim Corona-Verfahren wird der Pulverlack oder das Pulver an einer geladenen Corona vorbeigeführt und hierbei aufgeladen,
b) beim triboelektrischen oder elektrokinetischen Verfahren wird vom Prinzip der Reibungselektrizität Gebrauch gemacht.

Als Pulverlackharze werden typischerweise Epoxidharze, carboxyl- und hydroxylgruppenhaltige Polyesterharze, Polyurethan- und Acrylharze zusammen mit den üblichen Härtern eingesetzt. Auch Kombinationen von Harzen finden Verwendung. So werden beispielsweise Epoxidharze oft in Kombination mit carboxyl- und hydroxylgruppenhaltigen Polyesterharzen eingesetzt.

Darüberhinaus kann das verbesserte triboelektrische Verhalten des Farbmittels zur Verbesserung der Elektreteigenschaften bei eingefärbten (pigmentierten) Elektretmaterialien führen, wobei typische Elektretmaterialien auf Polyolefinen, halogenierten Polyolefinen, Polyacrylaten, Polyacrylnitrilen, Polystyrolen oder Fluorpolymeren, wie beispielsweise Polyethylen, Polypropylen, Polytetrafluorethylen und perfluoriertes Ethylen und Propylen, oder auf Polyestern, Polycarbonaten, Polyamiden, Polyimiden, Polyetherketonen, auf Polyarylensulfiden, insbesondere Polyphenylensulfiden, auf Polyacetalen, Celluloseestern, Polyalkylenterephthalaten sowie Mischungen daraus basieren. Elektretmaterialien haben zahlreiche Einsatzgebiet und können ihre Ladung durch Corona- oder Triboaufladung erhalten (Lit: G.M. Sessier, "Electrets", Topics in Applied Physics, Vol 33, Springer Verlag, New York, Heidelberg, 2nd Ed., 1987).

Des weiteren kann das verbesserte triboelektrische Verhalten des Farbmittels zu verbessertem Trennverhalten von eingefärbten (pigmentierten) Polymeren führen, die nach elektrostatischen Trennverfahren getrennt werden (Y. Higashiyau, J. of Electrostatics, 30, Seiten 203-212, 1993). Dementsprechend ist der triboelektrische Eigeneffekt von Pigmenten auch für die Kunststoffmassefärbung von Bedeutung. Ebenso ist der triboelektrische Eigeneffekt bei Verfahrens-/Verarbeitungsschritten, bei denen es zu intensivem Reibungskontakt kommt, von Bedeutung, wie z.B. Spinnprozessen, Folienziehprozessen oder weiteren Formgebungsverfahren.

Darüber hinaus ist die Phthalocyanin-Zusammensetzung auch geeignet als Farbmittel für Farbfilter, sowohl für die subtraktive wie für die additive Farberzeugung (P. Gregory "Topics in Applied Chemistry: High Technology Application of Organic Colorants" Plenum Press, New York 1991, S. 15 - 25).

Häufig stellt sich die Aufgabe, den Farbton in elektrophotographischen Bunttonern, Pulverlacken oder in Ink-Jet-Tinten zu nuancieren und den anwendungspezifischen Anforderungen anzupassen. Hierzu bieten sich insbesondere weitere organische Buntpigmente, anorganische Pigmente sowie Farbstoffe an.
Weitere organische Buntpigmente können in Mischungen mit der Kupferphthalocyanin-Zusammensetzung in Konzentrationen zwischen 0,01 und 50 Gew.-%, bevorzugt zwischen 0,1 und 25 Gew.-% und besonders bevorzugt zwischen 0,1 % und 15 Gew.-%, bezogen auf die Kupferphthalocyanin-Zusammensetzung, eingesetzt werden. Die weiteren organischen Buntpigmente können aus der Gruppe der Azopigmente oder polycyclischen Pigmente sein.

Bevorzugte Blau- und/oder Grünpigmente zum Nuancieren sind die jeweils anderen Kupferphthalocyanine, wie C.I. Pigment Blue 15, 15:1, 15:2, 15:3, 15:4, 15:6, P. Blue 16 (metallfreies Phthalocyanin), oder Phthalocyanine mit Aluminium, Nickel, Eisen oder Vanadium als Zentralatom, weiterhin Triarylcarboniumpigmente, wie Pigment Blue 1, 2, 9, 10, 14, 62, Pigment Green 1, 4, 45.
Mischungen mehrerer Komponenten sind ebenfalls geeignet. Größere Farbton-Schritte sind beispielsweise bei Verwendung von Orange-Pigmenten wie P.O. 5, 62, 36, 34, 13, 43, 71; von Gelbpigmenten wie P.Y. 12, 13, 17, 83, 93, 122, 155, 180, 174, 185, 97, von Rot-Pigmenten wie P.R. 48, 57, 122, 146, 184, 186, 202, 207, 209, 254, 255, 270, 272 oder von Violett-Pigmenten wie P.V. 1, 19 möglich.
Die Mischungen können in Form der Pulver, durch Mischen von Preßkuchen, sprühgetrockneten Preßkuchen, Masterbatches sowie durch Dispergieren (Extrusion, Kneten, Walzenstuhlverfahren, Perlmühlen, Ultraturrax) in Gegenwart eines Trägermaterials in fester oder flüssiger Form (Tinten auf wäßriger und nichtwäßriger Basis) sowie durch Flushen in Gegenwart eines Trägermaterials hergestellt werden. Wird das Farbmittel mit hohen Wasser- oder Lösemittelanteilen eingesetzt (> 5 %), so kann das Mischen auch in Gegenwart erhöhter Temperaturen und durch Vakuum unterstützt ablaufen.

Insbesondere zur Steigerung der Brillanz, aber auch zur Nuancierung des Farbtones bieten sich Mischungen mit organischen Farbstoffen an. Als solche sind bevorzugt zu nennen:
wasserlösliche Farbstoffe, wie z.B. Direct, Reactive und Acid Dyes, sowie lösemittellösliche Farbstoffe, wie z.B. Solvent Dyes, Disperse Dyes und Vat Dyes. Als Beispiele seien genannt: C.I. Reactive Yellow 37, Acid Yellow 23, Reactive Red 23, 180, Acid Red 52, Reactive Blue 19, 21, Acid Blue 9, Direct Blue 199, Solvent Yellow 14, 16, 25, 56, 62, 64, 79, 81, 82, 83, 83:1, 93, 98, 133, 162, 174, Solvent Red 8, 19, 24, 49, 89, 90, 91, 92, 109, 118, 119, 122, 124, 127, 135, 160, 195, 212, 215, Solvent Blue 44, 45, Solvent Orange 41, 60, 63, Disperse Yellow 64, Vat Red 41, Solvent Black 45, 27.

Auch können Farbstoffe und Pigmente mit fluoreszierenden Eigenschaften, wie ® Luminole (Riedel-de Haen), in Konzentrationen von 0,0001 bis 10 Gew.-%, bevorzugt von 0,001 bis 5 Gew.-%, ganz besonders bevorzugt zwischen 0,01 und 1 %, bezogen auf die Phthalocyanin-Zusammensetzung, eingesetzt werden, beispielsweise um fälschungssichere Toner herzustellen.

Anorganische Pigmente, wie beispielsweise TiO₂ oder BaSO₄, dienen in Mischungen zur Aufhellung. Weiterhin sind Mischungen mit Effekt-Pigmenten, wie beispielsweise Perlglanz-Pigmenten, Fe₂O₃-Pigmenten (®Paliochrome) sowie Pigmenten auf Basis cholesterischer Polymere, die in Abhängigkeit vom Beobachtungswinkel unterschiedliche Farbeindrücke ergeben, geeignet.

Die erfindungsgemäß eingesetzte Kupferphthalocyanin-Zusammensetzung kann mit positiv oder negativ steuernden Ladungssteuermitteln, kombiniert werden, um ein bestimmtes Aufladungsverhalten zu erreichen. Auch ein gleichzeitiger Einsatz von positiven und negativen Ladungssteuermitteln ist möglich.

Als Ladungssteuermittel kommen beispielsweise in Betracht:
Triphenylmethane; Ammonium- und Immoniumverbindungen; Iminiumverbindungen; fluorierte Ammonium- und fluorierte Immoniumverbindungen; biskationische Säureamide; polymere Ammoniumverbindungen; Diallylammoniumverbindungen; Arylsulfid-Derivate; Phenolderivate; Phosphoniumverbindungen und fluorierte Phosphoniumverbindungen; Calix(n)arene; ringförmig verknüpfte Oligosaccharide (Cyclodextrine) und deren Derivate, insbesondere Borester-Derivate, Interpolyelektrolytkomplexe (IPECs); Polyestersalze; Metallkomplexverbindungen, insbesondere Carboxylat-Metall, Salicylat-Metall- und Salicylat-Nichtmetallkomplexe, Aluminium-Azokomplexe, α-Hydroxycarbonsäure-Metall- und -Nichtmetallkomplexe; Borkomplexe von 1,2-Dihydroxyaromaten, 1,2-Dihydroxyaliphaten oder 2-Hydroxy-1-Carboxyaromaten; Benzimidazolone; Azine, Thiazine oder Oxazine, die im Colour Index als Pigments, Solvent Dyes, Basic Dyes oder Acid Dyes aufgeführt sind.

Beispiele für Ladungssteuermittel, die einzeln oder in Kombination untereinander mit der erfindungsgemäßen Phthalocyanin-Zusammensetzung kombiniert werden können, sind:
Triarylmethan-Derivate wie beispielsweise:
Colour Index Pigment Blue 1, 1:2, 2, 3, 8, 9, 9:1, 10, 10:1, 11, 12, 14, 18, 19, 24, 53, 56, 57, 58, 59, 61, 62, 67 oder beispielsweise Colour Index Solvent Blue 2, 3, 4, 5, 6, 23, 43, 54, 66, 71, 72, 81, 124, 125, sowie die im Colour Index unter Acid Blue und Basic Dye aufgeführten Triarylmethan-Verbindungen, sofern sie hinsichtlich ihrer Temperaturstabilität und Verarbeitbarkeit geeignet sind, wie beispielsweise Colour Index Basic Blue 1, 2, 5, 7, 8, 11, 15, 18, 20, 23, 26, 36, 55, 56, 77, 81, 83, 88, 89, Colour Index Basic Green 1, 3, 4, 9, 10, wobei sich wiederum Colour Index Solvent Blue 125, 66 und 124 ganz besonders eignen.
Besonders gut geeignet ist Colour Index Solvent Blue 124 in Form seines hochkristallinen Sulfats oder des Trichlor-triphenylmethyltetrachloraluminats. Metallkomplexe mit den CAS-Nummem 84179-66-8 (Chromazokomplex), 115706-73-5 (Eisenazokomplex), 31714-55-3 (Chromazokomplex), 84030-55-7 (Chromsalicylatkomplex), 42405-40-3 (Chromsalicylatkomplex) sowie die quaternäre Ammoniumverbindung CAS-Nr. 116810-46-9 sowie Aluminum-Azokomplexfarbstoffe, Metall-Carboxylate und Sulfonate.

Beispiele von für die Herstellung von Elektretfasem gut geeigneten Ladungssteuermitteln der Triphenylmethan-Reihe sind die in der DE-A-1 919 724 und der DE-A-1 644 619 beschriebenen Verbindungen.

Von besonderem Interesse sind Triphenylmethane wie beschrieben in US-A-5 051 585, insbesondere solche der Formel (2) 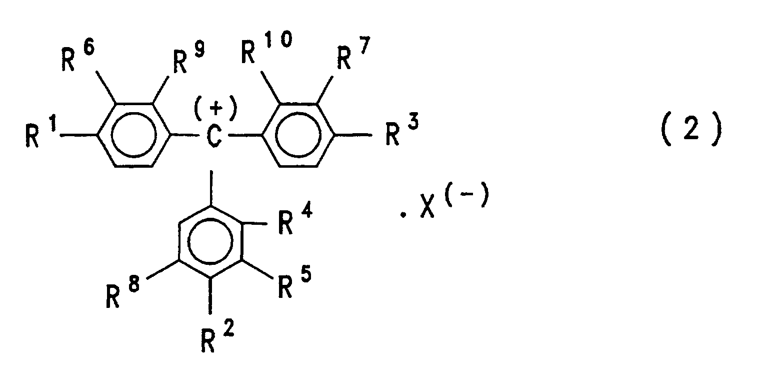 worin R¹ und R³ Phenylaminogruppen, R² eine m-Methylphenylaminogruppe und die Reste R⁴ bis R¹⁰ alle Wasserstoff sind.

Weiterhin geeignet sind Ammonium- und Immoniumverbindungen, wie beschrieben in US-A-5 015 676, sowie fluorierte Ammonium- und Immoniumverbindungen, wie beschrieben in US-A-5 069 994, insbesondere solche der Formel (3) 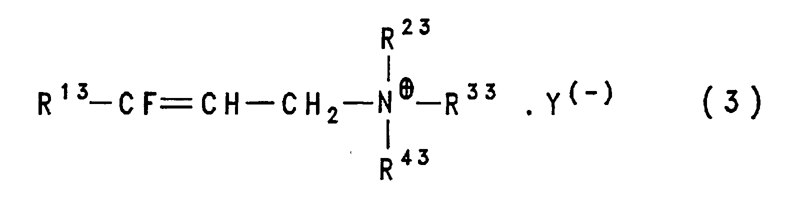 worin
R¹³ perfluoriertes Alkyl mit 5 bis 11 C-Atomen,
R²³, R³³ und R⁴³ gleich oder verschieden sind und Alkyl mit 1 bis 5, vorzugsweise 1 bis 2, C-Atomen bedeuten und
Y⁻ ein stöchiometrisches Äquivalent eines Anions, vorzugsweise eines Tetrafluoroborat- oder Tetraphenylborat-Anions ist.

Weiterhin geeignet sind biskationische Säureamide, wie beschrieben in WO 91/10172.

Weiterhin geeignet sind Diallylammoniumverbindungen, wie beschrieben in

DE-A-4 142 541 sowie die aus diesen erhältlichen polymeren Ammoniumverbindungen der Formel (6), wie beschrieben in DE-A-4 029 652 oder DE-A-4 103 610 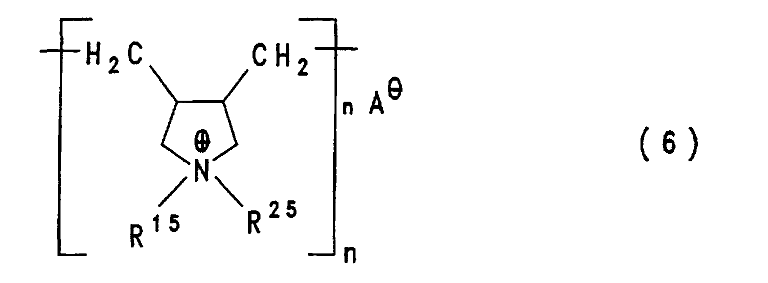 worin n einen Wert hat, der Molekulargewichten von 5000 bis 500000 g/mol, vorzugsweise Molekulargewichten von 40000 bis 400000 g/mol, entspricht.

Weiterhin geeignet sind Arylsulfid-Derivate, wie beschrieben in DE-A-4 031 705, insbesondere solche der Formel (7) 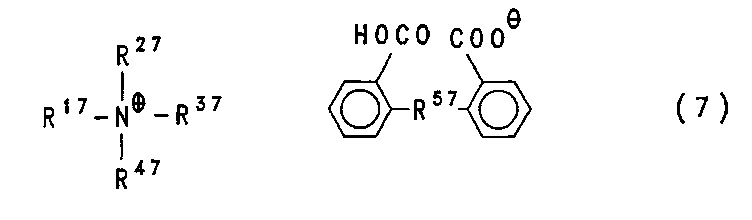 worin
R¹⁷, R²⁷, R³⁷ und R⁴⁷ gleiche oder verschiedene Alkylgruppen mit 1 bis 5, vorzugsweise 2 oder 3, C-Atomen bedeuten, und
R⁵⁷ einer der zweiwertigen Reste -S-, -S-S-, -SO- oder -SO₂- ist.
Beispielsweise sind R¹⁷ bis R⁴⁷ Propylgruppen und R⁵⁷ die Gruppe -S-S-.

Weiterhin geeignet sind Phenolderivate, wie beschrieben in EP-A-0 258 651, insbesondere solche der Formel (8) 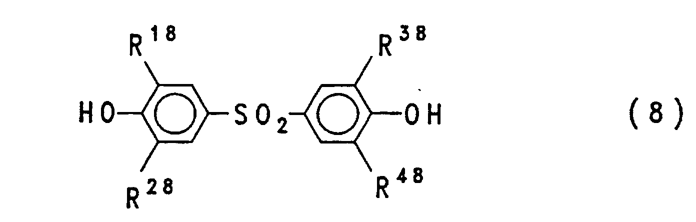 worin
R¹⁸ und R³⁸ Alkyl- oder Alkenylgruppen mit 1 bis 5, vorzugsweise 1 bis 3, C-Atomen, und R²⁸ und R⁴⁸ Wasserstoff oder Alkyl mit 1 bis 3, vorzugsweise Methyl, bedeuten.

Weiterhin geeignet sind Phosphoniumverbindungen und fluorierte Phosphoniumverbindungen, wie beschrieben in US-A-5 021 473 und in US-A-5 147 748.

Weiterhin geeignet sind Calix(n)arene, wie beschrieben in EP-A-0 385 580, EP-A-0 516 434 und in Angew. Chemie (1993), 195, 1258.

Weiterhin geeignet sind Metallkomplexverbindungen, wie Chrom-, Kobalt-, Eisen-, Zink- oder Aluminium-Azokomplexe oder Chrom-, Kobalt-, Eisen-, Zink- oder Aluminium-Salicyl- oder Borsäurekomplexe der Formel (14) 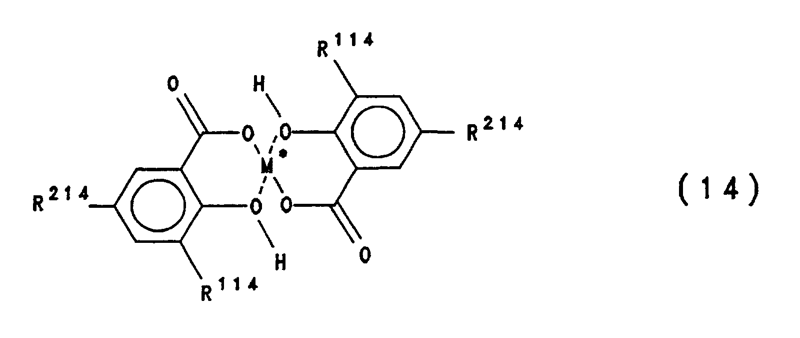 worin
M* ein zweiwertiges Metall-Zentralatom, vorzugsweise ein Chrom, Aluminium-, Eisen-, Bor- oder Zinkatom,
R¹¹⁴ und R²¹⁴ gleiche oder verschiedene, geradkettige oder verzweigte Alkylgruppen mit 1 bis 8, vorzugsweise 3 bis 6, C-Atomen, beispielsweise tert. Butyl, bedeuten.

Weiterhin geeignet sind Benzimidazolone, wie beschrieben in EP-A-0 347 695.

Weiterhin geeignet sind ringförmig verknüpfte Oligosaccharide, wie beschrieben in DE-A-4 418 842.
Weiterhin geeignet sind Polymersalze, wie beschrieben in DE-A-4 332 170, insbesondere das dort in Beispiel 1 beschriebene Produkt.

Weiterhin geeignet sind Cyclooligosaccharid-Verbindungen, wie sie beispielsweise in der DE-A-1 971 1260 beschrieben sind, die durch Umsetzung eines Cyclodextrins oder Cyclodextrin-Derivates mit einer Verbindung der Formel 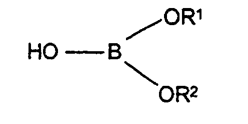 erhältlich sind, worin R¹ und R² Alkyl, bevorzugt C₁-C₄-Alkyl, bedeuten.

Weiterhin geeignet sind Inter-Polyelektrolyt-Komplexe, wie sie beispielsweise in der DE-A-197 32 995 beschrieben sind. Besonders geeignet sind hierbei Verbindungen, die ein Molverhältnis von polymeren kationischen zu polymeren anionischen Gruppen von 0,9:1,1 bis 1,1:0,9 haben.

Weiterhin geeignet, insbesondere bei der Anwendung in Flüssigtonern (Handbook of Imaging Materials, 1991, Marcel Dekker, Inc. Kap. 6 Liquid Toner Technology), sind oberflächenaktive, ionische Verbindungen und sogenannte Metallseifen.
Besonders geeignet sind alkylierte Arylsulfonate, wie Bariumpetronate, Calciumpetronate, Bariumdinonylnaphthalensulfonate (basisch und neutral), Calciumdinonylsulfonat oder Dodecylbenzolsulfonsäure-Na-salz und Polyisobutylensuccinimide (Chevrons ® Oloa 1200).
Weiterhin geeignet sind Soyalecithin und N-Vinylpyrrolidon-Polymere.

Weiterhin geeignet sind Natriumsalze von phosphatierten Mono- und Diglyceriden mit gesättigten und ungesättigten Substituenten, AB- Diblockcopolymere von A: Polymere von 2-(N;N)di-methylaminoethyl-methacrylat quarternisiert mit Methyl-ptoluolsulfonat, und B: Poly-2-ethylhexylmethacrylat.
Weiterhin geeignet, insbesondere in Flüssigtonern, sind di- und trivalente Carboxylate, insbesondere Aluminium-tristearat, Bariumstearat, Chromstearat, Magnesiumoktat, Calziumstearat, Eisennaphthalit und Zinknaphthalit.

Weiterhin geeignet sind chelatisierende Ladungssteuermittel, wie in EP 0 636 945 A1 beschrieben, metallische (ionische) Verbindungen, wie in EP 0 778 501 A1 beschrieben, Phosphat-Metallsalze, wie in JA 9 (1997)-106107 beschrieben, Azine der folgenden Color-Index-Nummern: C.I. Solvent Black 5, 5:1, 5:2, 7, 31 und 50; C.I. Pigment Black 1, C.I. Basic Red 2 und C.I. Basic Black 1 und 2.

Die Kombination von erfindungsgemäßer Phthalocyanin-Zusammensetzung und Ladungssteuermitteln kann durch physikalisches Mischen der jeweiligen Pulver, Preßkuchen oder Masterbatche, oder durch entsprechendes Aufziehen auf die Pigmentoberfläche (Pigmentcoating) erfolgen. Beide Komponenten können auch vorteilhaft bei Polymerisationstonern, bei denen das Bindemittel in Gegenwart der erfindungsgemäßen Kupferphthalocyanin-Zusammensetzung und ggf.des Ladungssteuermittels polymerisiert wird, zugesetzt werden oder bei der Herstellung von Flüssigtonem in hochsiedenden inerten Lösemitteln, wie Kohlenwasserstoffen, eingesetzt werden.

Auch ist die erfindungsgemäße Kupferphthalocyanin-Zusammensetzung für Elektrokoagulationstoner auf wäßriger Basis geeignet.

Gegenstand der Erfindung ist daher auch ein elektrophotographischer Toner oder Entwickler, enthaltend ein Tonerbindemittel, 0,1 bis 60 Gew.-%, vorzugsweise 0,5 bis 20 Gew.-%, an gegebenenfalls nuancierter Phthalocyanin-Zusammensetzung und 0 bis 20 Gew.-%, vorzugsweise 0,1 bis 5 Gew.-%, jeweils bezogen auf das Gesamtgewicht des Toners oder Entwicklers, eines Ladungssteuermittels aus der Klasse der Triphenylmethane, Ammonium- und Immoniumverbindungen; fluorierten Ammonium- und Immoniumverbindungen; biskationischen Säureamide; polymeren Ammoniumverbindungen; Diallylammoniumverbindungen; Arylsulfid-Derivate; Phenolderivate; Phosphoniumverbindungen und fluorierten Phosphoniumverbindungen; Calix(n)arene; Cyclodextrine; Polyestersalze; Metallkomplexverbindungen; Cyclooligosaccharid-Borkomplexe, Inter-Polyelektrolyt-Komplexe; Benzimidazolone; Azine, Thiazine oder Oxazine.

Es können auch weitere Komponenten dem Toner zugegeben werden, wie Wachse, die tierischer, pflanzlicher oder mineralischer Herkunft sein können, künstliche Wachse oder Mischungen davon. Als Wachse werden Stoffe verstanden, die bei 20°C knetbar, fest bis brüchig hart, grob bis feinkristallin, durchscheinend bis opaque, jedoch nicht glasartig sind. Weiterhin kann dem Toner ein Lichtschutzmittel zugegeben werden. Nachträglich können zum Toner auch Free Flow Agents, wie TiO₂ oder hochdisperse Kieselsäure, beigegeben werden.

Gegenstand der Erfindung ist weiterhin ein Pulver oder Pulverlack, enthaltend ein epoxid-, carboxyl- oder hydroxylgruppenhaltiges Polyester- oder Acrylharz oder eine Kombination daraus, 0,1 bis 60 Gew.-%, vorzugsweise 0,5 bis 20 Gew.-%, an gegebenenfalls nuancierter Phthalocyanin-Zusammensetzung und 0 bis 20 Gew.-%, vorzugsweise 0,1 bis 5 Gew.-%, jeweils bezogen auf das Gesamtgewicht des Pulvers oder Pulverlacks, eines Ladungssteuermittels aus den vorstehend für elektrophotographische Toner genannten Klassen und bevorzugten Verbindungen.

Die erfindungsgemäß verwendete Phthalocyanin-Zusammensetzung wird zweckmäßigerweise in einer Konzentration von 0,1 bis 60 Gew.-%, vorzugsweise von 0,5 bis 20 Gew.-%, besonders bevorzugt von 0,1 bis 5,0 Gew.-%, bezogen auf die Gesamtmischung, in das Bindemittel des jeweiligen Toners (flüssig oder trocken), Entwicklers, Pulverlacks, Elektretmaterials oder des elektrostatisch zu trennenden Polymers homogen, beispielsweise durch Extrudieren oder Einkneten, eingearbeitet oder dem Polymerisationsvorgang des Bindemittels zugesetzt. Dabei können die Kupferphthalocyanin-Zusammensetzung und gegebenenfalls die vorstehend erwähnten Ladungssteuermittel als getrocknete und gemahlene Pulver, Dispersionen oder Suspensionen, z.B. in organischen und/oder anorganischen Lösungsmitteln, Preßkuchen (der z.B. zum sogenannten Flush-Verfahren eingesetzt werden kann), sprühgetrocknete Preßkuchen, Masterbatch, Präparation, angeteigte Paste, als auf geeignete Träger, wie z.B. Kieselgur, TiO₂, Al₂O₃, aus wäßriger oder nicht-wäßriger Lösung aufgezogene Verbindung oder in sonstiger Form eingesetzt werden. Der Phthalocyaningehalt im Preßkuchen und Masterbatch beträgt üblicherweise zwischen 5 und 70 Gew.-%, vorzugsweise zwischen 20 und 50 Gew.-%. Darüberhinaus kann die Phthalocyanin- Zusammensetzung auch als hochkonzentrierter, insbesondere als sprühgetrockneter Preßkuchen eingesetzt werden, wobei hier der Phthalocyaningehalt zwischen 25 und 95 Gew.-%, bevorzugt zwischen 50 und 90 Gew.-%, liegt.

Die Höhe der elektrostatischen Aufladung der elektrophotographischen Toner oder der Pulverlacke, in welche das erfindungsgemäße Pigment homogen eingearbeitet wird, kann nicht vorhergesagt werden und wird an Standardtestsystemen unter gleichen Bedingungen (gleiche Dispergierzeiten, gleiche Teilchengrößenverteilung, gleiche Teilchenform) bei etwa 20°C und 50 % relativer Luftfeuchte gemessen. Die elektrostatische Aufladung des Toners erfolgt durch Verwirbelung mit einem Carrier, d.h. einem standardisierten Reibungspartner (3 Gewichtsteile Toner auf 97 Gewichtsteile Carrier), auf einer Rollbank (150 Umdrehungen pro Minute). Anschließend wird an einem üblichen q/m-Meßstand die elektrostatische Aufladung gemessen.

Die Triboversprühung der Pulver(lacke) wird mit einem Sprühgerät mit einem Normsprührohr und einer Sterninnenstange bei maximalem Pulverdurchsatz mit einem Sprühdruck von 3 bar durchgeführt. Der zu besprühende Gegenstand wird hierzu in einer Spritzkabine aufgehängt und aus ca. 20 cm Abstand direkt von vorne ohne weitere Bewegung des Sprühgerätes besprüht. Die jeweilige Aufladung des versprühten Pulvers wird anschließend mit einem "Meßgerät" zur Messung von triboelektrischer Ladung von Pulvern" der Firma Intec (Dortmund) gemessen. Zur Messung wird die Meßantenne des Meßgerätes direkt in die aus dem Sprühgerät austretende Pulverwolke gehalten. Die aus der elektrostatischen Ladung von Pulverlack oder Pulver sich ergebende Stromstärke wird in µA angezeigt. Die Abscheidequote wird anschließend in % durch eine Differenzwiegung aus versprühtem und abgeschiedenem Pulverlack bestimmt.

Die Transparenz und Farbstärke in Tonerbindemittelsystemen wird wie folgt untersucht: In 70 Gew.-Teile eines Rohfirnis (bestehend aus 15 Gew.-Teilen des jeweiligen Tonerharzes und 85 Gew.-Teilen Ethylacetat) werden 30 Gew.-Teile des pigmentierten Testtoners mit einem Dissolver eingerührt (5 min bei 5000 upm). Der so erzeugte Testtonerfirnis wird gegen einen gleichermaßen erzeugten Standardpigmentfirnis mit einem Handcoater auf geeignetes Papier (z.B. Buchdruckpapier) aufgerakelt. Eine geeignete Rakelgröße ist z.B. K bar N 3 (= 24 µm Rakelschichtdicke). Das Papier hat zur besseren Bestimmung der Transparenz einen schwarzen Balken aufgedruckt, die Transparenz- und Farbstärkeunterschiede in dL-Werten werden nach DIN 55 988 bestimmt, bzw. nach der Prüfvorschrift Marketing Pigmente, Clariant GmbH "Visuelle und Farbmetrische Bewertung von Pigmenten" Ausgabe 3, 1996 (Nr. 1/1) bewertet.

Weiterhin wurde gefunden, daß die Kupferphthalocyanin-Zusammensetzung als Farbmittel in Ink-Jet-Tinten auf wäßriger (einschließlich Mikroemulsionstinten) und nicht-wäßriger ("solvent-based") Basis, sowie in solchen Tinten, die nach dem Hotmelt-Verfahren arbeiten, geeignet sind.

Mikroemulsionstinten basieren auf organischen Lösemitteln, Wasser und ggf. einer zusätzlichen hydrotropen Substanz (Grenzflächenvermittler). Tinten auf nichtwäßriger Basis enthalten im wesentlichen organische Lösemittel und ggf. eine hydrotrope Substanz.

Gegenstand der vorliegenden Erfindung sind Ink-Jet-Aufzeichnungsflüssigkeiten, welche die Phthalocyanin-Zusammensetzung enthalten.
Die fertigen Aufzeichnungsflüssigkeiten enthalten im allgemeinen 0,5 bis 15 Gew.-%, vorzugsweise 1,5 bis 8 Gew.-%, der Kupferphthalocyanin-Zusammensetzung, bezogen auf das Gesamtgewicht der Aufzeichnungsflüssigkeit.

Mikroemulsionstinten bestehen im wesentlichen aus 0,5 bis 15 Gew.-%, vorzugsweise 1,5 bis 8 Gew.-%, der Phthalocyanin-Zusammensetzung, 5 bis 99 Gew.-% Wasser und 0,5 bis 94,5 Gew.-% organischem Lösungsmittel und/oder hydrotropen Verbindung.

"Solvent based" Ink-Jet-Tinten bestehen im wesentlichen aus 0,5 bis 15 Gew.-% der Phthalocyanin-Zusammensetzung, 85 bis 94,5 Gew.-% eines organischen Lösungsmittels und/oder hydrotroper Verbindung. Trägermaterialien für "Solvent based" Ink-Jet-Tinten können Polyolefine, Natur- und Synthesekautschuk, Polyvinylchlorid, Vinylchlorid/Vinylacetat-Copolymerisate, Polyvinylbutyrate, Wachs/Latex-Systeme oder Kombinationen davon, sein, die in dem "solvent" löslich sind.

Hot-Melt-Tinten basieren überwiegend auf organischen Verbindungen, wie Wachse, Fettsäuren, Fettalkohole oder Sulfonamide, die bei Raumtemperatur fest sind und bei Erwärmen flüssig werden, wobei der bevorzugte Schmelzbereich zwischen ca. 60°C und ca. 140°C liegt.

Gegenstand der Erfindung ist auch eine Hot-Melt Ink-Jet-Tinte, bestehend im wesentlichen aus 20 bis 90 Gew.-% Wachs, 1 bis 10 Gew.-% der, gegebenenfalls durch weitere Farbmittel nuancierten, Phthalocyanin-Zusammensetzung, 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans.

Bei den in den vorstehend beschriebenen Aufzeichnungsflüssigkeiten enthaltenen Lösungsmitteln kann es sich um ein organisches Lösungsmittel oder um ein Gemisch derartiger Lösungsmittel handeln. Geeignete Lösungsmittel sind beispielsweise ein- oder mehrwertige Alkohole, deren Ether und Ester, z.B. Alkanole, insbesondere mit 1 bis 4 C-Atomen, wie z.B. Methanol, Ethanol, Propanol, Isopropanol, Butanol, Isobutanol; zwei- oder dreiwertige Alkohole, insbesondere mit 2 bis 5 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glycerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykolmono-methyl-, -ethyl- oder -butyl-ether, Triethylenglykol-mono-methyloder -ethyl-ether; Ketone und Ketonalkohole wie z.B. Aceton, Methylethylketon, Diethylketon, Methylisobutylketon, Methylpentylketon, Cyclopentanon, Cyclohexanon, Diacetonalkohol; Amide, wie z.B. Dimethylformamid, Dimethylacetamid, N-Methylpyrrolidon, Toluol und n-Hexan.

Zur Herstellung der Aufzeichnungsflüssigkeiten benutztes Wasser wird vorzugsweise in Form von destilliertem oder entsalztem Wasser eingesetzt.

Als hydrotrope Verbindungen, die gegebenenfalls auch als Lösungsmittel dienen, können beispielsweise Formamid, Harnstoff, Tetramethylharnstoff, ∈-Caprolactam, Ethylenglykol, Diethylenglykol, Triethylenglykol, Polyethylenglykol, Butylglykol, Methylcellosolve, Glycerin, N-Methylpyrrolidon, 1,3-Diethyl-2-imidazolidinon, Thiodiglykol, Natrium-Benzolsulfonat, Na-Xylolsulfonat, Na-Toluolsulfonat, Natrium-Cumolsulfonat, Na-Dodecylsulfonat, Na-Benzoat, Na-Salicylat oder Natrium-Butylmonoglykolsulfat eingesetzt werden.

Weiterhin können die erfindungsgemäßen Aufzeichnungsflüssigkeiten noch übliche Zusatzstoffe enthalten, beispielsweise Konservierungsmittel, kationische, anionische oder nichtionogene oberflächenaktive Substanzen (Tenside und Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit.

Amine, wie z.B. Ethanolamin, Diethanolamin, Triethanolamin, N,N-Dimethylethanolamin oder Diisopropylamin, dienen hauptsächlich zur Erhöhung des pH-Wertes der Aufzeichnungsflüssigkeit. Sie sind normalerweise zu 0 bis 10 Gew.-%, vorzugsweise 0,5 bis 5 Gew.-% in der Aufzeichnungsflüssigkeit vorhanden.

Die erfindungsgemäßen Ink-Jet-Tinten können hergestellt werden, indem die Kupferphthalocyanin-Zusammensetzung als Pulver, als wäßrige oder nicht-wäßrige Präparation, als Suspension oder als Preßkuchen in das Mikroemulsionsmedium oder in das wäßrige oder nicht-wäßrige Medium oder in das Wachs zur Herstellung einer Hot-Melt Ink-Jet-Tinte eindispergiert wird. Der Preßkuchen kann auch ein hochkonzentrierter, insbesondere sprühgetrockneter, Preßkuchen, sein.

Außer zum Bedrucken von Papier, natürlichen und synthetischen Fasermaterialien, Folien oder Kunststoffen, können Ink-Jet-Tinten auch auf Glas, Keramik, Beton u. ä. eingesetzt werden.

In den nachfolgenden Beispielen bedeuten Teile Gewichtsteile und Prozent Gewichtsprozent. CuPc bedeutet Kupferphthalocyanin.

### Synthesebeispiel 1

### 1.1 Herstellung des Roh-Kupferphthalocyanins

Die Synthese von C.I. Pigment Blue 15:3 (Kupferphthalocyanin, β-Modifikation) erfolgt beispielsweise wie in DE-A-24 32 564, Beispiel 1, beschrieben. Das so erzeugte Rohkupferphthalocyanin wird anschließend in Wasser suspendiert und in einer Laborkugelmühle über 24 Stunden gemahlen.

### 1.2 Herstellung des Additives Phthalimidomethyl-CuPc

In ein 1-Liter Reaktionsgefäß werden bei Raumtemperatur 216 ml Wasser, 90 g Formalin (35 %ig) und 120 g Phthalimid unter Rühren zusammengegeben, und anschließend auf 100 °C erhitzt. Es bildet sich eine klare Lösung, die abgekühlt wird. Das ausfallende Reaktionsprodukt wird abgefiltert, gewaschen und getrocknet.
Ausbeute (trocken): 136 g Hydroxymethylphthalimid.

In ein 1-Liter Reaktionsgefäß werden zu 240 ml 98 %iger Schwefelsäure bei 35°C langsam 32 g rohes Kupferphthalocyanin aus Synthesebeispiel 1.1 unter Rühren zugegeben.
Anschließend werden 40 g des Hydroxymethylphthalimids langsam zugegeben. Das Reaktionsgemisch wird auf ca. 80°C erhitzt, anschließend auf Raumtemperatur abgekühlt und dann auf ein Eis-Wassergemisch gegeben. Der Niederschlag wird filtriert und gewaschen.
Ausbeute: 260 g Presskuchen (20 % Feststoffgehalt) Phthalimidomethyl-CuPc.

### 1.3 Lösemittelfinish

In ein 500 ml Reaktionsgefäß werden bei Raumtemperatur 50 g des unter 1.1 beschriebenen Roh-CuPc in 100 ml Wasser eingerührt. Anschließend werden 100 ml Methylethylketon zugegeben und für 2 Stunden unter Rühren am Rückfluß gekocht (74 °C). Das Lösemittel wird unter Normaldruck abdestilliert (ca. 80°C), bei gleichzeitiger, langsamer Zugabe von 100 ml H₂O. Anschließend werden bei ca. 80°C 6,25 g des unter 1.2 beschriebenen Phthalimidomethyl-CuPc Presskuchens zugegeben. Das so erhaltene Reaktionsgemisch wird bei 60 - 80°C über mehrere Stunden gerührt. Das Endprodukt wird abfiltriert, gewaschen, abgenutscht und anschließend getrocknet und gemahlen.
Ausbeute: 50 g blaue pulverförmige Kupferphthalocyanin-Zusammensetzung.

### Produktcharakterisierung:

| | | |
|---|---|---|
| pH | 6,5 | |
| Restfeuchte (Ausheizbirne) | 0,3 % | |
| Restsalzgehalt: | 70 µS/cm | |
| BET Oberfläche: | 61,3 m²/g | |

| Teilchengröße: | | |
|---|---|---|
| d₂₅: 0,08 µm | d₅₀: 0,1 µm | d₇₅: 0,13 µm |

### Teilchenform (Länge-zu-Breite-Verhältnis)

| | | |
|---|---|---|
| Gesamtprobe: | 3,06 : 1 | |
| Feinanteil 2,87 : 1 | Mittlerer Anteil 3,19 : 1 | Grobanteil 3,13 : 1 |

Teilchengröße und Teilchenform werden durch elektronenmikroskopische Aufnahme des Pigmentpulvers bestimmt. Hierzu wird das Pigment 15 min in Wasser dispergiert und anschließend aufgesprüht. Die Aufnahmen erfolgen bei 13000-facher und 29000-facher Vergrößerung.

Thermostabilität: Eine DTA (Differentialthermoanalyse) 3°C/min Aufheizrate, geschlossene Glasampulle, zeigt eine Thermostabilität von deutlich größer als 200°C.

### Röntgenbeugungsdiagramm (CuK_{α}-Strahlung):

2 Theta (s = stark, m = mittel, w = schwach):

| 2 Theta | Intensität (relative Intensität) | Halbwertsbreite (2 Theta) |
|---|---|---|
| 7,0 | 100 % | 0,28 |
| 9,2 | 76 % | 0,28 |
| 10,5 | 14 % | 0,28 |
| 12,5 | 13 % | 0,26 |
| 18,2 | 17 % | 0,2 |
| 18,5 | 17 % | 0,2 |
| 21,4 | 12 % | 0,2 |
| 23,0 | 11 % | 0,22 |
| 23,8 | 40 % | 0,24 |
| 26,2 | 28 % | 0,26 |
| 28,0 | 15 % | 0,24 |
| 30,4 | 16 % | 0,25 |

### Transparenz

In einem Tonerharz (Polyester auf Bisphenol-A-Basis) wird eine verbesserte Transparenz gemessen (24 µm Schichtdicke), wobei der pigmentierte Testtoner wie in Anwendungsbeispiel 2 hergestellt wurde.
Gegenüber dem im Synthesebeispiel 2 (Vergleich) angegebenen Standard wird bei angeglichener Farbstärke eine um 4 - 5 Bewertungseinheiten erhöhte Transparenz gefunden.

Bewertung der Transparenzunterschiede nach Prüfvorschrift 1/1 : 1 =̂ Spur, 2 =̂ etwas; 3 =̂ merklich; 4 =̂ deutlich; 5 =̂ wesentlich; 6 =̂ bedeutend transparenter.

Farbstärke: Gegenüber dem in Synthesebeispiel 2 angegebenen Standard ist das Pigment aus Synthesebeispiel 1 um 10 % farbstärker.

### Teilchenoberflächenladung

Die elektrokinetische Teilchenoberflächenladung wird bestimmt wie in "Chimia 48 (1994) Seiten 516 - 517 und der darin aufgeführten Literatur beschrieben. Bei einem vermessenen Probevolumen von 2 ml, und einer Pigmentkonzentration von 5 g/l, erhält man die entsprechende Pigmentteilchenoberflächenladung in mV/mg, wobei die Werte jeweils im sauren, alkalischen und bei dem Eigen-pH-Wert der Substanzprobe vermessen werden:

| pH | mV/mg |
|---|---|
| sauer (4,1) | -60 |
| Eigen-pH (6,5) | -71 |
| alkalisch (10,0) | -93 |

### Synthesebeispiel 2 (Vergleichsbeispiel)

Bei dem eingesetzten Pigment handelt es sich um ® Hostaperm Blau B2G (C.I. Pigment Blue 15:3, nicht substituiertes Kupferphthalocyanin), welches üblicherweise in zahlreichen Tonern eingesetzt wird und beispielsweise gemäß DE-A-3 023 722 hergestellt wurde. Das CuPc-Additiv wurde nicht zugesetzt.

### Pigmentcharakterisierung

| | | |
|---|---|---|
| pH | 6,4 | |
| Restfeuchte (Ausheizbime) | 0,2 % | |
| Restsalzgehalt: | 50 µS/cm | |
| BET Oberfläche: | 50,2 m²/g | |

| Teilchengröße | | |
|---|---|---|
| d₂₅: 0,07 µm | d₅₀: 0,09µm | d₇₅: 0,11 µm |

### Teilchenform (Länge-zu-Breite-Verhältnis)

| | | |
|---|---|---|
| Gesamtprobe: | 2,67 : 1 | |
| Feinanteil 2,33 : 1 | Mittlerer Anteil 2,62 : 1 | Grobanteil 2,96 : 1 |

### Synthesebeispiel 3 (Vergleichsbeispiel)

20 g des unter Synthesebeispiel 1.1 beschriebenen Roh-CuPc werden in 300 ml 66,5 %ige Schwefelsäure bei 35°C eingetragen. Die Suspension wird 2,5 Stunden bei 35°C gerührt und anschließend auf 320 ml Wasser gegossen. Es wird auf 80°C erwärmt und 1 Stunde bei 80°C gerührt. Dann wird filtriert und zum Extrahieren der Schwefelsäure mit Wasser gewaschen.

Der Presskuchen wird mit Wasser zu einer leicht rührbaren Suspension angerührt und 10,7 g Presskuchen Phthalimidomethyl-CuPc 20 %ig bei Raumtemperatur zugegeben. Dann wird unter Druck auf 135°C erhitzt und 7 Stunden bei 135°C gerührt. Das Produkt wird bei 60°C filtriert, gewaschen, bei 80°C getrocknet und pulverisiert:

| | | |
|---|---|---|
| pH | 6,5 | |
| Restfeuchte (Ausheizbirne) | 0,3 % | |
| Restsalzgehalt: | 70 µS/cm | |
| BET Oberfläche: | 49 m²/g | |

| Teilchengröße | | |
|---|---|---|
| d₂₅: 0,08 µm | d₅₀: 0,1µm | d₇₅: 0,17 µm |

### Teilchenform (Länge-zu-Breite-Verhältnis)

| | | |
|---|---|---|
| Gesamtprobe: | 1,62 : 1 | |
| Feinanteil 2,33 : 1 | Mittlerer Anteil 1,92 : 1 | Grobanteil 1,38 : 1 |

### Anwendungsbeispiele für Toner

5 Teile des jeweiligen Farbmittels werden mittels eines Kneters innerhalb von 30 Minuten in 95 Teile eines Tonerbindemittels (Polyesterharz auf Bisphenol-A-Basis, ® Almacryl T500) homogen eingearbeitet. Anschließend wird auf einer Labor-Universalmühle gemahlen und dann auf einem Zentrifugalsichter klassifiziert. Die gewünschte Teilchenfraktion (4 bis 25 µm) wird mit einem Carrier aktiviert, der aus mit Silikon beschichteten Ferrit-Teilchen der Größe 50 bis 200 µm (Schüttdichte 2,75 g/cm³) besteht (FBM 96 - 100; Fa. Powder Techn.).

Die Messung erfolgt an einem üblichen q/m-Meßstand. Durch Verwendung eines Siebes mit einer Maschenweite von 25 µm wird sichergestellt, daß bei den Tonerausblasungen kein Carrier mitgerissen wird. Die Messungen erfolgen bei ca. 50 %iger relativer Luftfeuchte. In Abhängigkeit von der Aktivierdauer werden folgende q/m-Werte [µC/g] gemessen:

| Anwendungsbeispiel | Tonersystem | Aktivierdauer / q/m-Werte in [µC/g] | | | | |
|---|---|---|---|---|---|---|
| | | 5 min | 10 min | 30 min | 2 h | 24 h |
| 1 (Harzlinie) | Nur Polyesterharz, ohne Farbmittel | -20 | -20 | -17 | -13 | -8 |
| 2 | Polyesterharz + 5 % Farbmittel aus Synthesebsp. 1 | -19 | -12 | -8 | -6 | -4 |
| 3 (Vergleich) | Polyesterharz + 5 % Farbmittel aus Synthesebsp. 2 | -12 | -9 | -3 | +2 | +3 |
| 4 (Vergleich) | Polyesterharz + 5 % Farbmittel aus Synthesebsp. 3 | -18 | -6 | -3 | -2 | 0 |

Es zeigte sich, daß der Toner mit dem erfindungsgemäßen Farbmittel (Anwendungsbeispiel 2) am besten dem Aufladungsverhalten der Harzlinie (Anwendungsbeispiel 1) folgt.

### Anwendungsbeispiel 5

5 Teile des Farbmittels aus Synthesebeispiel 1 und 1 Teil des Ladungssteuermittels der Formel 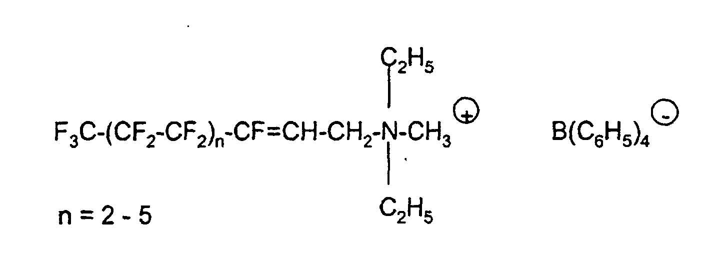 werden in ein Polyester-Tonerbindemittel eingearbeitet und vermessen.

In Abhängigkeit von der Aktivierdauer werden folgende q/m-Werte gemessen:

| Aktivierdauer | q/m [µC/g] |
|---|---|
| 5 Min. | - 13 |
| 10 Min. | - 11 |
| 30 Min. | - 10 |
| 2 Std. | - 9 |
| 23 Std. | - 9 |

Es zeigt sich eine sehr gute Aufladungskonstanz über den gesamten Aktivierzeitraum.

### Anwendungsbeispiel 6

5 Teile des Farbmittels aus Synthesebeispiel 1 und 1 Teil des Ladungssteuermittels der Formel 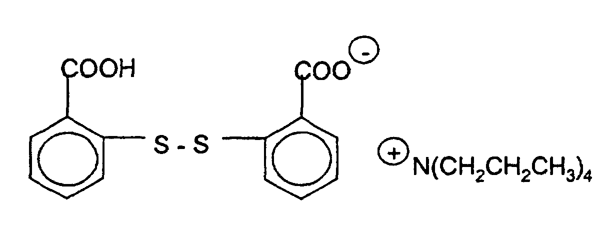 werden in ein Styrol-Acrylat-Tonerbindemittel eingearbeitet und vermessen.

In Abhängigkeit von der Aktivierdauer werden folgende q/m-Werte gemessen:

| Aktivierdauer | q/m [µC/g] |
|---|---|
| 5 Min. | + 2 |
| 10 Min. | + 3 |
| 30 Min. | + 4 |
| 2 Std. | + 3 |
| 23 Std. | + 2 |

Es zeigt sich eine sehr gute Aufladungskonstanz über den gesamten Aktivierzeitraum.

### Anwendungsbeispiele für Ink-Jet-Tinten

### Anwendungsbeispiel 7

10 Teile einer feingemahlenen 50 %igen Pigmentpräparation mit dem Farbmittel aus Synthesebeispiel 1 (5 Teile) in Poyvinylchlorid/Polyvinylacetat-Copolymerisat (5 Teile), wobei die homogene Farbmitteldispersion durch intensives Einkneten in das Copolymerisat erreicht wird, werden unter Rühren in eine Mischung von 80 Teilen Methyl-iso-butylketon und 10 Teilen 1,2-Propylenglykol mittels eines Dissolvers eingebracht. Man erhält eine Ink-Jet-Tinte mit hoher Transparenz, Lichtechtheit und guter Düsengängigkeit.

### Anwendungsbeispiel 8

Zu 5 Teilen Farbmittel aus Synthesebeispiel 1, das in Form einer 40 %igen ultrafeinen wäßrigen Farbmittelpräparation vorliegt, werden unter Rühren (Flügelrührer oder Dissolver) zunächst 75 Teile deionisiertes Wasser und anschließend 6 Teile ®Mowilith DM 760 (Acrylatdispersion), 2 Teile Ethanol, 5 Teile 1,2-Propylenglykol und 0,2 Teile ®Mergal K7 zugegeben. Man erhält eine Ink-Jet-Tinte mit hoher Transparenz, Lichtechtheit und guter Düsengängigkeit.

### Anwendungsbeispiel 9

Zu 5 Teilen Farbmittel aus Synthesebeispiel 1, das in Form einer 40 %igen ultrafeinen wäßrigen Farbmittelpräparation vorliegt, werden unter Rühren zunächst 80 Teile deionisiertes Wasser und anschließend 4 Teile ®Luviskol K 30 (Polyvinylpyrrolidon, BASF), 5 Teile 1,2-Propylenglykol und 0,2 Teile ®Mergal K7 zugegeben. Man erhält eine Ink-Jet-Tinte mit hoher Transparenz, Lichtechtheit und guter Düsengängigkeit.

### Anwendungsbeispiel für Pulverlacke

### Anwendungsbeispiel 10

5 Teile des Farbmittels aus Synthesebeispiel 1 werden in 95 Teilen eines Pulverlackbindemittels auf Basis eines TGIC-Polyester, z.B. ®Uralac P 5010 (DSM, Holland), homogen eingearbeitet. Zur Bestimmung der Abscheidequote werden 30 g des Test-Pulverlackes mit einem definierten Druck durch eine Tribopistole versprüht.

| Druck [bar] | Strom [µA] | Abscheidequote [%] |
|---|---|---|
| 3 | 1,8 | 78 |

## Patentansprüche

1. Verwendung einer Kupferphthalocyanin-Zusammensetzung, bestehend im wesentlichen aus einer Verbindung der Formel (I) 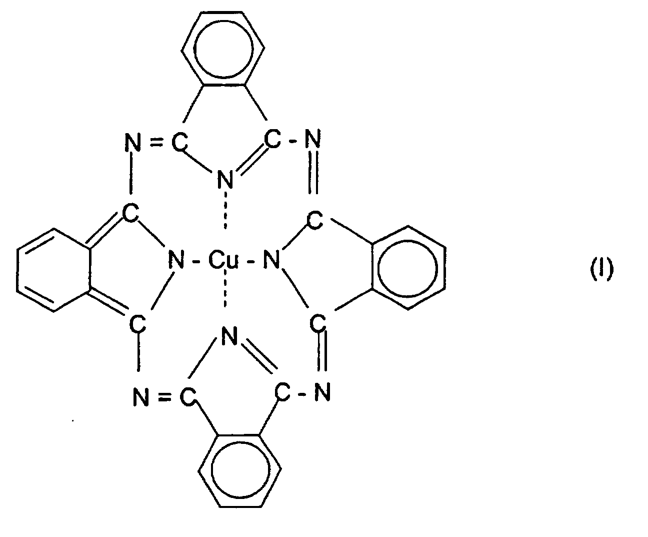 und einer Verbindung der Formel (II) 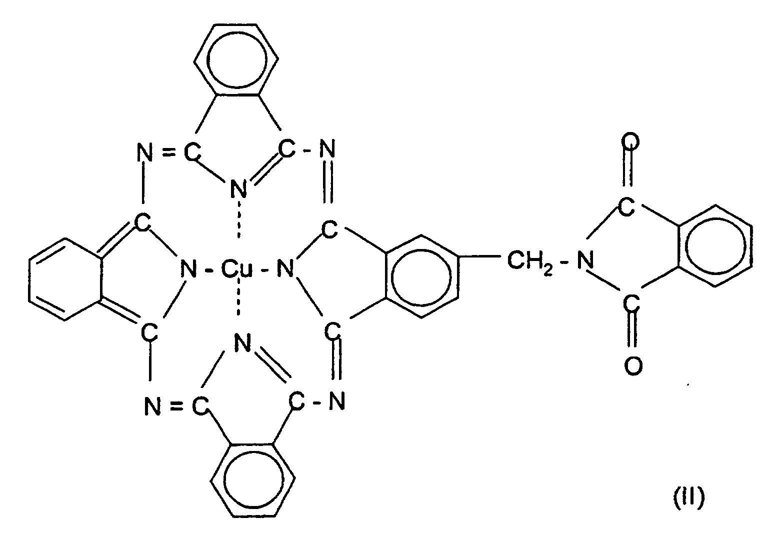 als Farbmittel in elektrophotographischen Tonern und Entwicklern, Pulvern und Pulverlacken, Elektretmaterialien, Ink-Jet-Tinten sowie in Farbfiltern, **dadurch gekennzeichnet, daß** die Verbindungen der Formeln (I) und (II) eine Teilchenform von einem mittleren Länge-zu-Breite-Verhältnis von größer als 2,5:1 haben.

2. Verwendung nach Anspruch 1, **dadurch gekennzeichnet, daß** das mittlere Länge zu Breite Verhältnis 3:1 bis 6:1 ist.

3. Verwendung nach Anspruch 1 oder 2, **dadurch gekennzeichnet, daß** das Mengenverhältnis der Verbindung der Formel (I) zur Verbindung der Formel (II) 90 zu 10 bis 99 zu 1 Gew.-% beträgt.

4. Verwendung nach einem oder mehreren der Ansprüche 1 bis 3, **dadurch gekennzeichnet, daß** die Verbindung der Formel (I) C.I. Pigment Blue 15:3 ist.

5. Verwendung nach einem oder mehreren der Ansprüche 1 bis 4, **dadurch gekennzeichnet, daß** die Phthalocyanin-Zusammensetzung mit einem weiteren organischen Buntpigment, einem anorganischen Pigment oder einem Farbstoff nuanciert ist.

6. Verwendung nach einem oder mehreren der Ansprüche1 bis 5, **dadurch gekennzeichnet, daß** die Phthalocyanin-Zusammensetzung in Kombination mit einem Ladungssteuermittel aus der Gruppe der Triphenylmethane; Ammoniumund Immoniumverbindungen; Iminiumverbindungen; fluorierte Ammonium- und fluorierte Immoniumverbindungen; biskationische Säureamide; polymere Ammoniumverbindungen; Diallylammoniumverbindungen; Arylsulfid-Derivate; Phenolderivate; Phosphoniumverbindungen und fluorierte Phosphoniumverbindungen; Calix(n)arene; ringförmig verknüpfte Oligosaccharide und deren Derivate, insbesondere Borester-Derivate, Interpolyelektrolytkomplexe; Polyestersalze; Metallkomplexverbindungen, insbesondere Carboxylat-Metall, Salicylat-Metall- und Salicylat-Nichtmetallkomplexe, Aluminium-Azokomplexe, α-Hydroxycarbonsäure-Metallund -Nichtmetallkomplexe; Borkomplexe von 1,2-Dihydroxyaromaten, 1,2 Dihydroxyaliphaten oder 2-Hydroxy-1-Carboxyaromaten; Benzimidazolone; Azine, Thiazine und Oxazine, eingesetzt wird.

7. Verwendung nach einem oder mehreren der Ansprüche 1 bis 6 in Flüssigtonem oder Pulvertonem.

8. Elektrophotographischer Toner oder Entwickler, enthaltend ein Tonerbindemittel, 0,1 bis 60 Gew.-%, vorzugsweise 0,5 bis 20 Gew.-%, einer in Ansprüche 1-6 definierten Phthalocyanin-Zusammensetzung und 0 bis 20 Gew.-%, vorzugsweise 0,1 bis 5 Gew.-%, jeweils bezogen auf das Gesamtgewicht des Toners oder Entwicklers, eines Ladungssteuermittels aus der Klasse der Triphenylmethane, Ammonium- und Immoniumverbindungen; fluorierten Ammonium- und Immoniumverbindungen; biskationischen Säureamide; polymeren Ammoniumverbindungen; Diallylammoniumverbindungen; Arylsulfid-Derivate; Phenolderivate; Phosphoniumverbindungen und fluorierten Phosphoniumverbindungen; Calix(n)arene; Cyclodextrine; Polyestersalze; Metallkomplexverbindungen; Cyclooligosaccharid-Borkomplexe, Inter-Polyelektrolyt-Komplexe; Benzimidazolone; Azine, Thiazine oder Oxazine.

9. Pulver oder Pulverlack, enthaltend ein epoxid-, carboxyl- oder hydroxylgruppenhaltiges Polyester- oder Acrylharz oder eine Kombination daraus, 0,1 bis 60 Gew.-%, vorzugsweise 0,5 bis 20 Gew.-%, einer in Ansprüche 1-6 definierten Phthalocyanin-Zusammensetzung und 0 bis 20 Gew.-%, vorzugsweise 0,1 bis 5 Gew.-%, jeweils bezogen auf das Gesamtgewicht des Pulvers oder Pulverlacks, eines Ladungssteuermittels aus der Klasse der Triphenylmethane, Ammonium- und Immoniumverbindungen; fluorierten Ammonium- und Immoniumverbindungen; biskationischen Säureamide; polymeren Ammoniumverbindungen; Diallylammoniumverbindungen; Arylsulfid-Derivate; Phenolderivate; Phosphoniumverbindungen und fluorierten Phosphoniumverbindungen; Calix(n)arene; Cyclodextrine; Polyestersalze; Metallkomplexverbindungen; Cyclooligosaccharid-Borkomplexe, Inter-Polyelektrolyt-Komplexe; Benzimidazolone; Azine, Thiazine oder Oxazine.

10. Ink-Jet-Tinte, enthaltend 0,5 bis 15 Gew.-% der in Anspruch 1 bis 7 definierten Kupferphthalocyanin-Zusammensetzung.

11. Ink-Jet-Tinte nach Anspruch 10, **dadurch gekennzeichnet, daß** sie eine Mikroemulsionstinte, eine Solvent based Ink-Jet-Tinte oder eine Hot-Melt Ink-Jet-Tinte ist.

## Claims

1. The use of a copper phthalocyanine composition consisting essentially of a compound of the formula (I) 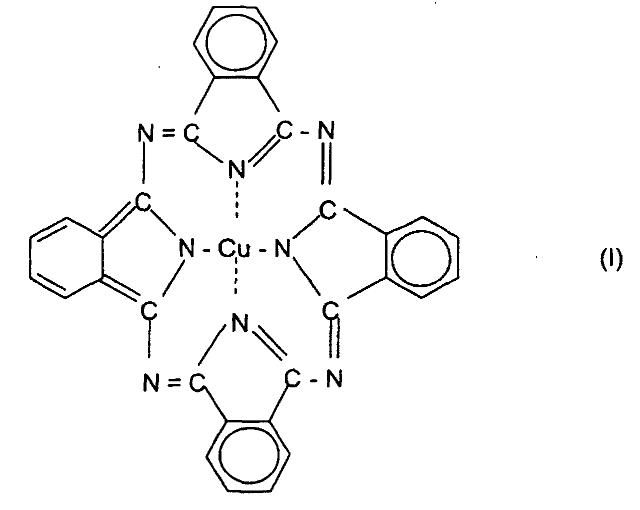 and of a compound of the formula (II) 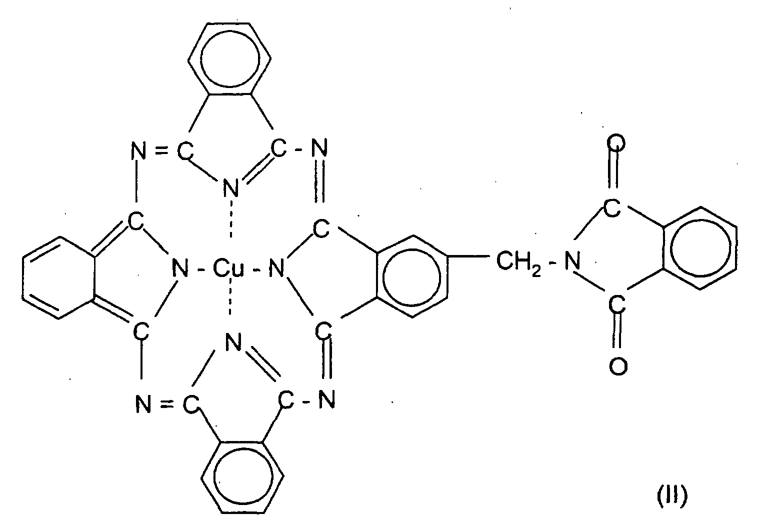 as a colorant in electrophotographic toners and developers, powders and powder coating materials, electret materials, inkjet inks, and color filters, wherein the compounds of the formulae (I) and (II) have a particle morphology with an average length-to-width ratio of more than 2.5:1.

2. The use as claimed in claim 1, wherein the average length-to-width ratio is from 3:1 to 6:1.

3. The use as claimed in claim 1 or 2, wherin the quantitative ratio of the compound of the formula (I) to the compound of the formula (II) is from 90 : 10 to 99 : 1 % by weight.

4. The use as claimed in one or more of claims 1 to 3, wherein the compound of the formula (I) is C.I. Pigment Blue 15:3.

5. The use as claimed in one or more of claims 1 to 4, wherein the phthalocyanine composition is shaded with a further organic color pigment, an inorganic pigment, or a dye.

6. The use as claimed in one or more of claims 1 to 5, wherein the phthalocyanine composition is used in combination with a charge control agent from the group of the triphenylmethanes; ammonium and immonium compounds; iminium compounds; fluorinated ammonium and fluorinated immonium compounds; biscationic acid amides; polymeric ammonium compounds; diallylammonium compounds; aryl sulfide derivatives; phenol derivatives; phosphonium compounds and fluorinated phosphonium compounds; calix(n)arenes; cyclically linked oligosaccharides and their derivatives, especially boron ester derivatives, interpolyelectrolyte complexes; polyester salts; metal complex compounds, especially carboxylate-metal, salicylate-metal and salicylate-nonmetal complexes, aluminum-azo complexes, α-hydroxycarboxylic acid-metal and -nonmetal complexes; boron complexes of 1,2-dihydroxyaromatics, 1,2-dihydroxyaliphatics or 2-hydroxy-1-carboxyaromatics; benzimidazolones; and azines, thiazines or oxazines.

7. The use as claimed in one or more of claims 1 to 6 in liquid toners or powder toners.

8. An electrophotographic toner or developer comprising a toner binder, from 0.1 to 60 % by weight, preferably from 0.5 to 20 % by weight, of a phthalocyanine composition as set forth in one of claims 1-6, and from 0 to 20 % by weight, preferably from 0.1 to 5 % by weight, based in each case on the overall weight of the toner or developer, of a charge control agent from the class of the triphenylmethanes, ammonium and immonium compounds; fluorinated ammonium and immonium compounds; biscationic acid amides; polymeric ammonium compounds; diallylammonium compounds; aryl sulfide derivatives; phenol derivatives; phosphonium compounds and fluorinated phosphonium compounds; calix(n)arenes; cyclodextrins; polyester salts; metal complex compounds; cyclooligosaccharide-boron complexes, interpolyelectrolyte complexes; benzimidazolones; azines, thiazines or oxazines.

9. A powder or powder coating material comprising an acrylic resin or polyester resin containing epoxy, carboxyl or hydroxyl groups, or a combination of such resins, from 0.1 to 60 % by weight, preferably from 0.5 to 20 % by weight, of a phthalocyanine composition as set forth in one of claims 1-6, and from 0 to 20 % by weight, preferably from 0.1 to 5 % by weight, based in each case on the overall weight of the powder or powder coating material, of a charge control agent from the class of the triphenylmethanes, ammonium and immonium compounds; fluorinated ammonium and immonium compounds; biscationic acid amides; polymeric ammonium compounds; diallylammonium compounds; aryl sulfide derivatives; phenol derivatives; phosphonium compounds and fluorinated phosphonium compounds; calix(n)arenes; cyclodextrins; polyester salts; metal complex compounds; cyclooligosaccharide-boron complexes, interpolyelectrolyte complexes; benzimidazolones; azines, thiazines or oxazines.

10. An inkjet ink comprising from 0.5 to 15 % by weight of a copper phthalocyanine composition as set forth in one of claims 1 to 7.

11. An inkjet ink as claimed in claim 10, which is a microemulsion ink, a solvent-based inkjet ink or a hot-melt inkjet ink.

## Revendications

1. Utilisation d'une composition de phtalocyanine de cuivre, constituée essentiellement par un composé de formule (I) 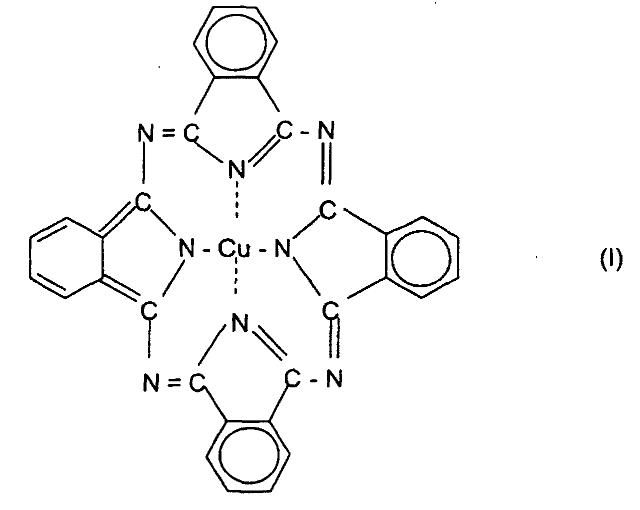 et un composé de formule (II) 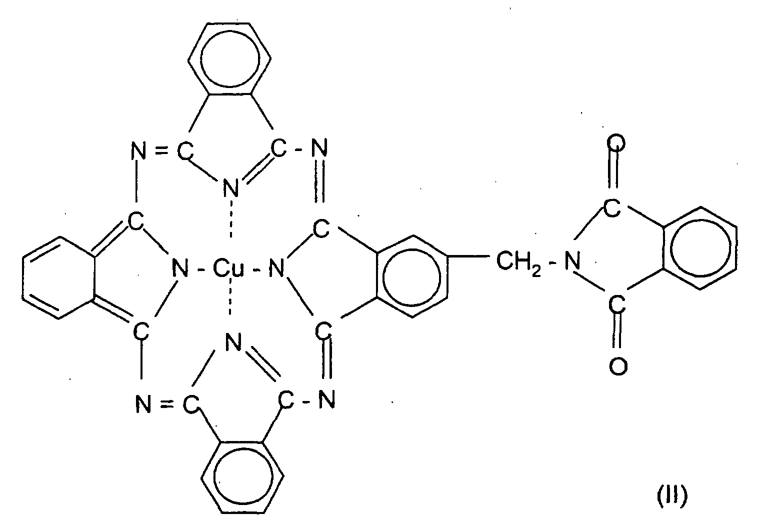 en tant que colorant dans des toners et révélateurs électrophotographiques, des poudres et vernis en poudre, des substances ferroélectriques, des encres à jet d'encre, ainsi que des filtres colorés, **caractérisé en ce que** les composés de formules (I) et (II) présentent une forme de particules présentant un rapport moyen de la longueur à la largeur supérieur à 2,5:1.

2. Utilisation selon la revendication 1, **caractérisée en ce que** le rapport moyen de la longueur à la largeur est de 3:1 à 6:1.

3. Utilisation selon la revendication 1 ou 2, **caractérisée en ce que** le rapport quantitatif du composé de formule (I) au composé de formule (II) est de 90 à 10 à 99 à 1 % en masse.

4. Utilisation selon une ou plusieurs des revendications 1 à 3, **caractérisée en ce que** le composé de formule (I) est le C.I. Pigment Blue 15:3.

5. Utilisation selon une ou. plusieurs des revendications 1 à 4, **caractérisée en ce que** la composition de phtalocyanine est nuancée par un autre pigment organique coloré, un pigment inorganique ou un colorant.

6. Utilisation selon une ou plusieurs des revendications 1 à 5, **caractérisée en ce que** la composition de phtalocyanine en combinaison avec un agent de contrôle de charge pris dans le groupe comprenant les triphénylméthanes ; des composés d'ammonium et d'immonium ; des composés d'iminium ; des composés d'ammonium et d'immonium fluorés ; des amides d'acide biscationiques ; des composés d'ammonium polymères ; des composés de diallylammonium ; des dérivés de sulfures d'aryles ; des dérivés du phénol ; des composés de phosphonium et des composés de phosphonium fluorés ; des calix(n)arènes ; des oligosaccharides reliés en cycles et leurs dérivés, en particulier des dérivés d'esters de bore, des complexes d'interpolyélectrolytes ; des sels de polyesters ; des composés de complexes métalliques, en particulier des carboxylates métalliques, des salicylates métalliques, des complexes de salicylates d'éléments métalloïdes ; des complexes azoïques d'aluminium ; des complexes métalliques et métalloïdes d'acide α-hydroxycarboxylique ; des complexes de bore de composés 1,2-dihydroxyaromatiques, des 1,2-dihydroxy-aliphatiques ou 2-hydroxy-1-carboxy-aromatiques ; des benzimidazolones ; des azines, thiazines et oxazines.

7. Utilisation selon une ou plusieurs des revendications 1 à 6, dans des toners liquides ou toners pulvérulents.

8. Toner ou révélateur électrophotographique renfermant un liant de toner, de 0,1 à 60 % en masse, de préférence de 0,5 à 20 % en masse, d'une composition de phtalocyanine définie dans les revendications 1 à 6, et de 0 à 20 % en masse, de préférence de 0,1 à 5 % en masse, à chaque fois par rapport au poids total du toner ou du révélateur, d'un agent de contrôle de charge pris dans la classe des triphénylméthanes, des composés d'ammonium et d'immonium ; des composés d'ammonium et d'immonium fluorés ; des amides d'acide biscationiques ; des composés d'ammonium polymères ; des composés de diallylammonium ; des dérivés de sulfures d'aryles ; des dérivés du phénol ; des composés de phosphonium et des composés de phosphonium fluorés ; des calix(n)arènes ; des cyclodextrines ; des sels de polyesters ; des composés de complexes métalliques ; des cyclooligosaccharides-complexes de bore ; des complexes d'interpolyélectrolytes ; des benzimidazolones ; des azines, thiazines et oxazines.

9. Poudre ou vernis en poudre, renfermant une résine polyester ou acryliques présentant des groupes époxyde, carboxyle ou hydroxyle, ou une de leurs combinaisons, de 0,1 à 60 % en masse, de préférence de 0,5 à 20 % en masse, d'une composition de phtalocyanine définie dans les revendications 1 à 6, et de 0 à 20 % en masse, de préférence de 0,1 à 5 % en masse, à chaque fois par rapport à la masse totale de la poudre ou du vernis en poudre, d'un agent de contrôle de charge pris dans la classe comprenant des triphénylméthanes ; des composés d'ammonium et d'immonium ; des composés d'ammonium et d'immonium fluorés ; des amides d'acides bicationiques ; des composés d'ammonium polymères ; des composés de diallylammonium ; des dérivés d'e sulfures d'aryles ; dés dérivés du phénol ; des composés de phosphonium et des composés de phosphonium fluorés ; des calix(n)arènes ; les cyclodextrines ; des sels de polyesters ; des composés de complexes métalliques ; des complexes de cyclooligosaccharidebore, des complexes d'inter-polyélectrolytes ; des benzimid-azolones ; des azines, thiazines ou oxazines.

10. Encre à jet d'encre renfermant de 0,5 à 15 % en masse de la composition de phtalocyanine de cuivre définie aux revendication 1 à 7.

11. Encre à jet d'encre selon la revendication 10, **caractérisée en ce qu'**il s'agit d'une encre en microémulsion, d'une encre à jet à base de solvant ou d'une encre à changement de phase.
